# EUROPEAN PATENT APPLICATION

(11) **EP 1 642 708 A1**
(43) Date of publication of application: **05.04.2006**
(21) Application number: 04380198.4
(22) Date of filing: 01.10.2004
(51) Int. Cl.: B32B 27/32, B32B 25/16, G10K 11/168, C08L 23/02, B29C 70/58, B60R 13/00

(54) **Layered sheet and manufacturing process**

(71) Applicant: Centro Tecnologico de Grupo Copo, S.L., 36416 Mos, Pontevedra (ES)
(72) Inventor: Reyes Crespo, Horacio Juan, 36146 Mos Pontevedra (ES)
(74) Representative: Temino Ceniceros, Ignacio

(57) **Abstract**

The layered sheets obtained as proposed by the invention are formed by two or more substrates, consisting of mixtures of different polyolefins, in their middle (2) or lower (5) layer, and polyolefins with elastomeric composites in the upper or external layers (1) and (4); the performance of the procedure for obtaining the sheets consists of a process of co-extrusion in which mixing is made of the different components giving a product that produces the end pieces by vacuum moulding, pieces that will be applied as interior upholstery for vehicles, providing them with the required acoustic and thermal insulation and a high level of comfort, at the same time as they provide a high level of impermeability that allows for washing.

## Description

### OBJECT OF THE INVENTION

The present invention refers to thermoformable sheets of two or more substrates, consisting of mixtures of polyolefins in their middle layer and polyolefins with elastomeric composites in their external layers, used for providing the inner upholstery inside vehicles as applied to the floors of the vehicles, as well as to the wheel housings, under-floor storage areas, linings and other parts of a vehicle.

The invention also deals with the procedure to be followed for the manufacture of said layered material.

The aim of the invention is to provide a material based on multi-layer thermoformable sheets that is washable, with a high level of impermeability, by means of a simple and efficient method.

### BACKGROUND TO THE INVENTION

Regarding the interior areas of different kinds of vehicles currently available on the market, it is standard practice to use different kinds of materials obtained in different ways, for producing flooring, wheel housings, under-floor storage areas, linings, in short, all nature of interior upholstery, with a series of characteristics and features that consumers demand nowadays.

The purpose of fitting this internal upholstery inside vehicles, apart from the fact that from a decorative point of view it is much more attractive and pleasing to the eye, creating an atmosphere that is significantly more comfortable, is to provide a series of features in terms of acoustics, absorbing the typical vibrations and noises that vehicles generate when in operation.

A further function of this internal upholstery is to provide the thermal insulation required in these cases for the vehicles.

At the present time on the market, these pieces for the inside upholstery on cars are produced in two different ways: in the majority of cases the procedure applied involves the injection of plastic, and at other times the system used involves the moulding of the different materials. However, neither of these two systems manages to optimise the features that are required for this type of material in terms of the wear caused by rubbing or by scratching.

The majority of these inner linings on vehicles do not provide the required degree of impermeability to withstand washing without experiencing some deterioration in their properties.

A further problem arising from the methods currently used is that the production of the pieces generally involves the separate application of different products, whereby each product fulfils certain specific characteristics, and then the subsequent overall assembly of all the components is performed.

This method involves a greater number of steps in the overall process of producing the pieces, which considerably complicates the process, at the same time as it increases the costs involved in the equipment required for undertaking it.

### DESCRIPTION OF THE INVENTION

The thermoformable layered sheets obtained through the procedure proposed by the invention provides a fully satisfactory solution to the problems posed above.

It is a process for producing thermoformable sheets of two or more substrates, consisting of mixtures of polyolefins in their middle layer and polyolefins with elastomeric composites in the external layers, so becoming multi-layer thermoformable sheets.

These multi-layer sheets are used for providing the upholstery inside vehicles, fitted to the floors of the vehicles, to the wheel housings, under-floor storage areas, linings in the boot area and other appropriate parts of the vehicle.

The composition of these sheets is based largely on the use of polyolefins and elastomeric additives, whereby each sheet is to consist of several layers, with the composition of the sheets always having a middle or lower layer and an upper or external layer, whose composition and characteristics are different.

The middle or lower layer consists of mixtures of different polyolefins, with the material providing the rigidity required to comply with the vehicle's requirements, both in assembly and dimensionally, in addition to other laboratory specifications.

This will be the middle or lower layer depending on the number of layers constituting the product: if there are only two, then it will be the lower one, but if the product comprises more than two layers, it will be the middle one.

The upper or external layer consists of a mixture of polyolefins and a high content of elastomeric load, with proportions ranging between 15 and 50%, which will give the product obtained a soft and pliable appearance.

The procedure for obtaining the thermoformable layered sheets, as per this invention, consists of a process of co-extrusion, which is to involve the mixing of polyolefins and elastomers differentiated in each one of the layers.

The composite described above may be processed, for obtaining the different pieces, using innovative techniques, which allows for substituting the standard process of plastic injection with other methods such as vacuum moulding, jet moulding or pressure moulding.

Finally, in the same process of production by extrusion, the external finish of this multi-layer product allows for decorative finishes involving serigraphy, photo-printing, stamping, etc as well as textured personalisations, namely engravings, with the option available of giving it different colour finishes.

The procedure herein described allows for the grouping of different chemical compositions as are polyolefins, elastomers, organic loads, minerals, colourings, fabrics and non fabrics, within one or several layers, and so comply with the specifications required of the end product, imbuing it with a high level of impermeability, which is important when fitting in vehicles, as it allows for washing without any loss whatsoever to its functional properties.

### DESCRIPTION OF THE DRAWINGS

In order to complement the description that is being given and to further a better understanding of the nature of the invention, in accordance with a preferential example of the practical performance of the same, attachment is made, as an integral part of said description, of a set of drawings that for illustrative and not restrictive purposes depict the following:
Figure 1. It provides a schematic depiction of a layered sheet obtained as per the procedure of the invention, in which three layers can be seen, two external ones and a middle one.
Figure 2. It provides a schematic depiction of another thermoformable layered sheet, in which only two layers can be seen: an upper and a lower one.

### PREFERRED EMBODYMENT OF THE INVENTION

On the basis of the above figures, in accordance with an example of a preferential performance of the invention, it may be seen how the layered sheets, produced as per the manufacturing procedure that the invention propounds, consist of a series of layers that imbue it with the specifications required for its use in providing upholstery for the inside of vehicles.

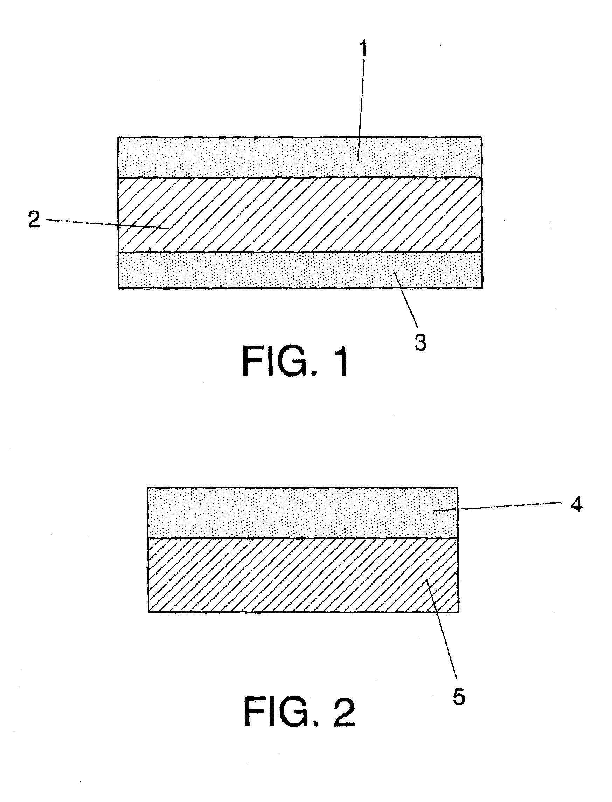

Specifically, the layered sheet depicted in figure 1 consists of three layers: an upper layer (1), a middle layer (2) and a lower layer (3); noteworthy amongst these layers is the upper or external layer (1) consisting of mixtures of polyolefins and elastomeric composites, and the middle layer (2), consisting of mixtures of different polyolefins.

Figure 2 depicts a layered sheet similar to the one in figure 1, but which is made up of only two layers, an upper layer (4) with similar characteristics to the previous upper or external layer (1), and a lower layer (5), which has the same properties that had been assigned to the middle layer (2) in figure 1.

The performance of this procedure for obtaining layered thermoformable sheets is undertaken by means of a co-extrusion process involving the mixing of polyolefins and elastomers differentiated in each one of the layers. Once the product has been obtained through the mixing of the various products, the process permits panels to be produced by simultaneously calendering said products laminated beforehand on a co-extrusion of up to three layers, producing a final multi-layer product. Finally, the different pieces can be obtained by a range of methods such as vacuum moulding, jet moulding or pressure moulding, using temperatures lower than in other known processes, exceeding and improving on properties of other composites within the same field of use.

The use of sheets of this kind constitutes a significant technological contribution regarding those in standard use, providing improvements in terms of acoustics, thermal insulation, elasticity, low combustibility, with a value less than or equal to 100 mm/min, resistance to wear, with a value greater than or equal to 3/4, resistance to acids and chemical agents.

The contribution of each layer regarding the required specifications is different, so the middle or lower layer, by consisting mainly of polyolefins, provides a high level of soundproofing, greater than normal, as it absorbs low sound frequencies, in addition to providing the rigidity required to comply with the specific requirements for the end product.

On the other hand, the upper or external layer, by being composed of polyolefins with elastomers, produces an elastic product with relatively low resistance, being easily shaped and fashioned by mechanical forces, resistant to wear and to different chemical actions, maintaining its high level of impermeability.

Given its composition of polyolefins, this product is 100% recyclable for producing pieces of the same characteristics, in compliance with regulations on quality and environment laid down for the finished product.

A further advantage provided by the use of products such as those described beforehand is that it produces pieces that incorporate said products, involving only two processes, thereby differentiating itself as a superior product to those normally used in this field.

It is also important to note another series of advantages associated with the use of this kind of layered sheets for obtaining inner linings for vehicles:
- The product obtained is easily malleable in process, at temperatures below other commonly used processes.
- The product, once finished, provides high impact resistance, at the same time as it absorbs major distortions.
- The product's impermeability imbues it with special importance upon being fitted in vehicles, as it can be washed with no detriment whatsoever to its functional properties.
- It allows for the production of geometrically complex pieces without requiring the use of ribs, reinforcements, etc., to ensure geometric stability without any change whatsoever to its resistance.
- The process manages to combine the properties of the various composites used into a single sheet through the sum of the characteristics of the same.

## Claims

1. Layered sheet, of those normally used in the car industry for producing interior upholstery, **characterised by** the fact that it consists of two or more layers, with the upper layer (1- 4) consisting of mixtures of polyolefins and a high content of elastomeric load in a proportion ranging between 15 and 50%, and a middle (2) or lower (5) layer consisting of mixtures of different kinds of polyolefins.

2. Manufacturing procedure for the layered sheets in claim 1, **characterised by** the fact that it consists of a co-extrusion process involving the mixing of polyolefins and elastomers in suitable proportions.

3. Manufacturing procedure for layered sheets, as per claim 2, **characterised by** the fact that the end product allows for the pieces to be obtained by vacuum moulding, jet moulding or pressure moulding.

4. Manufacturing procedure for thermoformable layered sheets, as per claim 2, **characterised by** the fact that the option exists to obtain an external finish on the product, in the same co-extrusion process, that allows for decorative finishes involving serigraphy, photo-printing, stamping, engraving and such like.
